Europäisches Patentamt

European Patent Office

Office européen des brevets

(19)

(11) **EP 0 944 263 A1**

(12) **EUROPEAN PATENT APPLICATION**

(43) Date of publication:
**22.09.1999 Bulletin 1999/38**

(51) Int Cl.⁶: **H04N 7/26**, H04N 7/68

(21) Application number: **99200835.9**

(22) Date of filing: **18.03.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventor: **Liang, Jie**<br>**Plano, Texas (US)** |
| (30) Priority: **20.03.1998 US 78729 P** | (74) Representative: **Holt, Michael**<br>**Texas Instruments Limited,**<br>**P.O. Box 5069**<br>**Northampton NN4 7ZE (GB)** |
| (71) Applicant: **Texas Instruments Incorporated**<br>**Dallas, Texas 75251 (US)** | |

(54) **Image compression**

(57)    A method of encoding and decoding and a system for image transmission and/or storage with wavelet decomposition and classification to sequences for encoding with resynchroniation markers for sequences to provide error concealment.

FIG. 1b

**Description**

BACKGROUND OF THE INVENTION

The invention relates to electronic image methods and devices, and, more particularly, to digital communication and storage systems with compressed images.

Video communication (television, teleconferencing, Internet, digital camera, and so forth) typically transmits a stream of video frames (pictures, images) along with audio over a transmission channel for real time viewing and listening or storage. However, transmission channels frequently add corrupting noise and have limited bandwidth. Consequently, digital video transmission with compression enjoys widespread use. In particular, various standards for compression of digital video have emerged and include the various JPEG and MPEG standards.

Tekalp, Digital Video Processing (Prentice Hall 1995), Clarke, Digital Compression of Still Images and Video (Academic Press 1995), and Schafer et al, Digital Video Coding Standards and Their Role in Video Communications, 83 Proc. IEEE 907 (1995), include summaries of various compression methods, including descriptions of the JPEG, H.261, MPEG-1, and MPEG-2 standards

For encoding a single frame as in JPEG or an I frame in MPEG, Shapiro, Embedded Image Coding Using Zerotrees of Wavelet Coefficients, 41 IEEE Tr.Sig.Proc 3445 (1993) provides a wavelet hierarchical subband decomposition which groups wavelet coefficients at different scales and predicts zero coefficients across scales. This provides a quantization and fully embedded bitstream in the sense that the bitstream of a lower bitrate is embedded in the bitstream of higher bitrates.

Villasenor et al, Wavelet Filter Evaluation for Image Compression, 4 IEEE Tr.Image Proc. 1053 (1995) discusses the wavelet subband decomposition with various mother wavelets.

The loss of synchronization happens frequently when transmitting compressed bitstreams coded with variable length entropy codes. The ability of the decoder to reestablish synchronization is critical to the performance of the coding algorithm under noisy channels. Resynchronization markers have been used extensively for synchronization between encoder and decoder. For intance, MPEG4 error resilient profile uses resynchronization markers extensively. In addition to establishing synchronization for the arithmetic decoder, resynchronization markers divide the bitstream into partitions that can be handled differently by the system transport layer. For instance, unequal error protection can be used to put different protection on the different data partitions.

Hardware and software implementations of the JPEG, H.261, MPEG-1, and MPEG-2 compression and decoding exist. Further, programmable microprocessors or digital signal processors, such as the Ultrasparc or TMS320C6x, running appropriate software can handle most compression and decoding in real time, and less powerful processors may handle lower bitrate compression and decompression.

SUMMARY OF THE INVENTION

The present invention provides data partitioning and sequence resynchronization markers for the JPEG2000 baseline coding and decoding methods.

This has the advantages including improvement in the performance of the JPEG2000 baseline under channel error conditions and introduces no degradation to the performance of the baseline under error-free conditions.

BRIEF DESCRIPTION OF THE DRAWINGS

The drawings are schematic for clarity.

Figures 1a-c is a block diagram of a preferred embodiment system and components.

Figures 2a-c illustrates subband hierarchical decomposition.

DESCRIPTION OF THE PREFERRED EMBODIMENTS

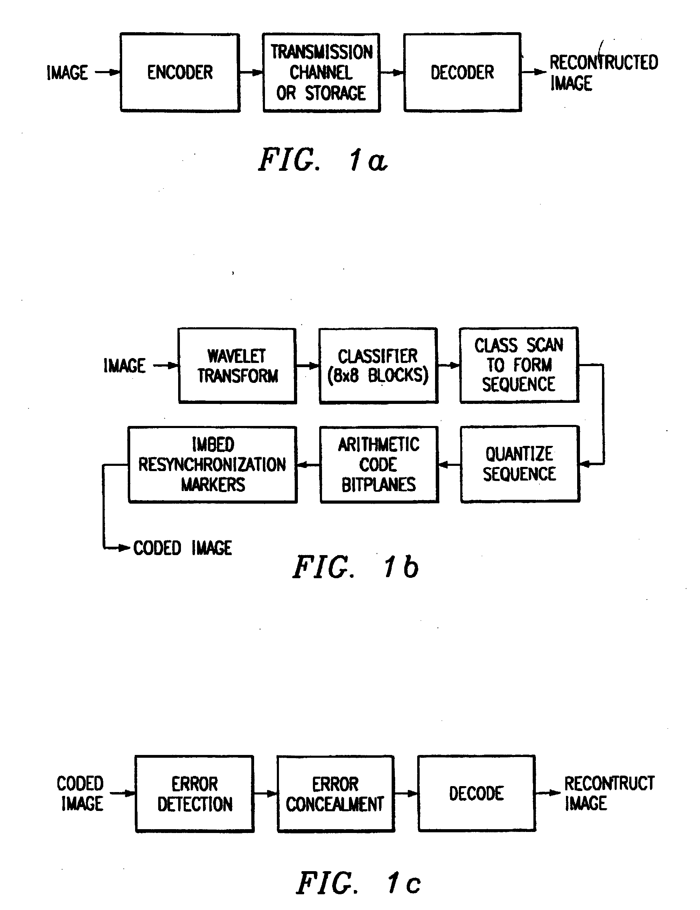

Figure 1a is a high level functional block diagram of a first preferred embodiment image system, and Figures 1b-1c show details of the encoder and decoder. Error correction coding is omitted for clarity, and the decoding outside of the error concealment is generally the inverse of the encoding.

The encoding will be explained with the help of an example for simplicity; thus presume an image (frame) of 1152 rows of 1408 pixels with 8-bit pixels (-128 to + 127) and presume four scale levels in a wavelet hierarchical decomposition. The value of the pixel at (j,k) may be denoted $x(j,k)$ for $0 \leq j \leq 1151$ and $0 \leq k \leq 1407$.

To begin the hierarchical decomposition, first filter the 1152 by 1408 frame with each of the four filters $h_0(j)h_0(k)$, $h_0(j)h_1(k)$, $h_1(j)h_0(k)$, and $h_1(j)h_1(k)$, to give 1152 by 1408 filtered frames (boundary pixel values are used to extend the frame for computations which otherwise would extend beyond the frame). A computationally simple $h_0(k)$ function

equals $1/\sqrt{2}$ at k=0,1, and is zero for all other k; $h_1(k)$ equals $1/\sqrt{2}$ at k=0, $-1/\sqrt{2}$ at at k= 1, $1/8\sqrt{2}$ at k=2,3, $-1/8\sqrt{2}$ at k=-1,-2, and zero for all other k. The Villasenor article cited in the Background lists other filter functions. The filtering is mathematically convolution with the functions, so $h_0$ is a lowpass filter in one dimension (averages over two adjacent pixels) and $h_1$ is a highpass filter in one dimension (essentially a difference of adjacent pixels). Thus the four filters are two-dimensional lowpass-lowpass, lowpass-highpass, highpass-lowpass, and highpass-highpass, respectively.

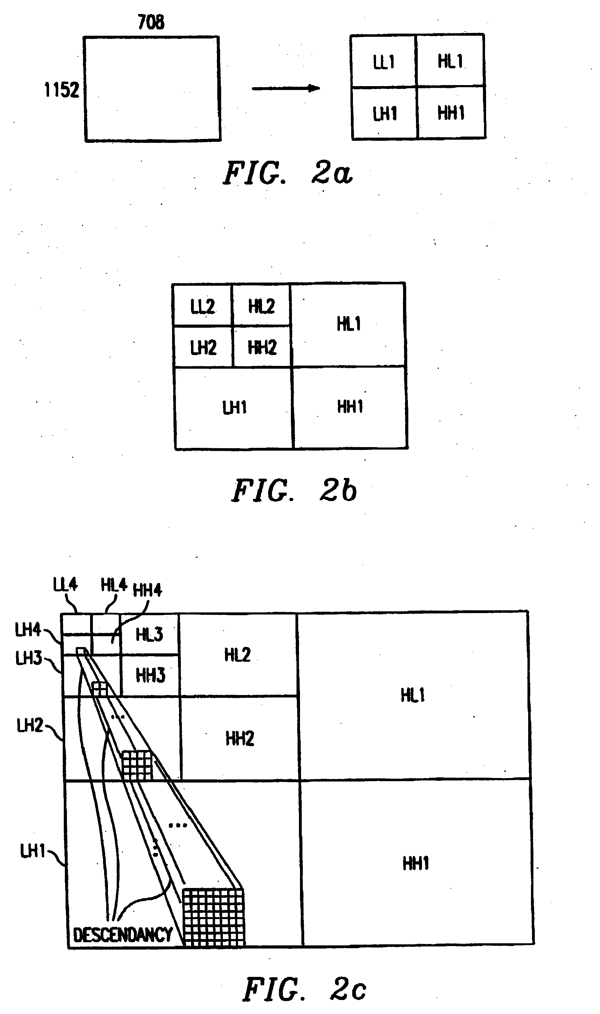

Next, subsample each filtered frame by a factor of four by retaining only pixels at (j,k) with j and k both even integers. This subsampling will yield four 576 by 704 subarrays of wavelet coefficients, denoted LL1, LH1, HL1, and HH1, respectively, with coefficient locations (j,k) relabelled for $0 \leq j \leq 575$ and $0 \leq k \leq 703$. This forms tne first level of tne decomposition, and the four subarrays can be placed together to form a single 144 by 176 array wnich makes visualization of the decomposition simple as illustrated in Figure 2a. Thus LL1 is a lower resolution version of the original frame and could be used as a compressed version of the original frame. The values of the pixels in these filtered and subsampled images are the first level wavelet coefficients.

The LL1, LH1, HL1, and HH1 subarrays can be used to reconstruct the original frame by first interpolating each subarray by a factor of four (to restore the 1152 by 1408 size), then filtering the four 1152 by 1408 arrays with filters $g_0(j)g_0(k)$, $g_0(j)g_1(k)$, $g_1(j)g_0(k)$, and $g_1(j)g_1(k)$, respectively, and lastly pixelwise adding these four filtered images together. The functions $g_0$ and $g_1$ are lowpass and highpass filters, respectively, and relate to $h_0$ and $h_1$ by $g_0(n) = (-1)^n h_1(n)$ and $g_1(n) = (-1)^n h_0(n)$. The $h_0$, $h_1$, $g_0$, and $g_1$ functions are symmetric about 1/2, rather than about 0 as would be the case for an odd tap filter, so after reconstruction the pixel index is shifted by 1 to adjust for the two 1/2 pixel shifts during two filterings.

The second level in the decomposition simply repeats the four filterings with the $h_0$ and $h_1$ functions plus subsampling by a factor of four but using the LL1 subarray as the input. Thus the four filtered subarrays are each 288 by 352 and denoted LL2, LH2, HL2, and HH2. As before, the LL2, LH2, HL2, and HH2 can be arranged to visualize the decomposition of LL1 and also could be used for reconstruction of LL1 with the $g_0$ and $g_1$ based filters. The LH1, HL1, and HH1 subarrays of first level coefficients remain unfiltered.

Repeat this decomposition on LL2 by filtering with the four filters based on ho and hl followed by subsampling to obtain LL3, LH3, HL3, and HH3 which are 18 by 22 coefficient subarrays. Again, LL3, LH3, HL3, and HH3 can be arranged to visualize the decomposition of LL2.

Complete the hierarchical four level decomposition of the original frame by a last filtering with the four filters based on $h_0$ and $h_1$ followed by subsampling of LL3 to obtain LL4, LH4, HL4, and HH4 which are each a 144 rows of 176 coefficients subarray. Figure 2c illustrates all of the resulting subarrays arranged to form an overall 1152 by 1408 coefficient array. Figure 2c also indicates the tree relation of coefficients in various levels of the decomposition; indeed, a coefficient w(j,k) in LH4 is the result of filtering and subsampling of coefficients x(j,k) in LL3:

$$\begin{aligned}
w(j,k) &= h_0(0)h_1(0)x(2j,2k) + h_0(0)h_1(1)x(2j,2k-1) \\
&\quad + h_0(0)h_1(-1)x(2j,2k+1) + h_0(0)h_1(2)x(2j,2k-2) \\
&\quad + h_0(0)h_1(-2)x(2j,2k+2) + h_0(0)h_1(3)x(2j,2k-3) \\
&\quad + h_0(1)h_1(0)x(2j-1,2k) + h_0(1)h_1(1)x(2j-1,2k-1) \\
&\quad + h_0(1)h_1(-1)x(2j-1,2k+1) + h_0(1)h_1(2)x(2j-1,2k-2) \\
&\quad + h_0(1)h_1(-2)x(2j-1,2k+2) + h_0(1)h_1(3)x(2j-1,2k-3)
\end{aligned}$$

Because the filtering plus subsampling is basically computing w(j,k) from the 2 by 2 area in LL3 (the values of $h_i(k)$ are small except for k=0,1), there are four coefficients (x(2j-1, 2k-1), x(2j-1,2k), x(2j,2k-1) and x(2j,2k)) in LL3 which determine w(j,k) in LH4. Now each of these four coefficients in LL3 is related to a corresponding one of the four coefficients in LH3 at the same positions ((2j- 1, 2k-1), (2j-1,2k), (2j,2k-1) and (2j,2k)) because they were computed from essentially the same 4 by 4 location in LL2. Thus the coefficient w(j,k) in LH4 is called the parent of the four related coefficients z(2j-1,2k-1), z(2j-1,2k), z(2j,2k-1) and z(2j,2k) in LH3 and each of these four coefficients in LH3 is a child of the parent coefficient in LH4. This terminology extends to LH2 and LH1. The generic term descendant includes children, children of children, and so forth. See Figure 2c showing descendants. Note that further decomposition levels could be used.

Using the hierarchical decomposition of the original frame into coefficient subarrays LL4, LH4, ..., HH1, classify the wavelet coefficients blocks of block size 8x8 in the next to last subbands according to the variance of the energy of the coefficients. The classification results are then propagated to the other subbands by descendency. Note that other classifications could be used.

The coefficients that are in the same subband and belong to the same class are scanned block by block into a 1-dimensional sequence.

Each sequence is then quantized using Trellis Coded Quantization (TCQ). The quantized coefficients are then coded bitplane by bitlane with arithmetic coding.

The preferred embodiment data partitioning is based on the data unit of a sequence. At the beginning of each sequence, initialize the models used in the binary arithmetic coder with a uniform distribution. This initialization cuts off any cross-sequence dependencies and is essential for robust decoding. Experimental results also show that the re-initialization does not degrade the performance for the error-free case.

A resynchronization marker is put at the beginning of the bitstream for each sequence. The sequence resynchronization marker has three bytes and can be described as follows:

| Sequence Resynch Marker | Sequence Number |
| --- | --- |

The first two bytes are the sequence resynchronization marker that is not emulated by the arithmetic coder. The sequence number enables the decoder to do error detection and concealment intelligently.

An alternative resynchronization marker can be described as follows:

| FF | D0 | Sequence Number |
| --- | --- | --- |

The first two bytes of this alternative marker are the JPEG resynchronization marker that is not emulated by the arithmetic coder.

At the decoder side, the decoder starts from the first sequence. After it finds a sequence resynchronization marker, it initializes the statistical models with uniform distribution and starts the decoding of another sequence.

The error detection is done by two factors: (a) the sequence number and (b) the size of the bitstream between two resynchronization markers:

(a) Error detection by sequence number: there are two sequence numbers present to the decoder after a successful search for a resynchronization marker. One sequence number is the internal counter for decoded sequences, and another one is the number contained in the resynchronization marker. When the two are in agreement, no error signal is flashed. Otherwise, we know an error occurred.

When an error is detected by the sequence number, estimate the true sequence number for this sequence to be decoded by looking for the next resynchronization marker. A true resynchronization marker can be estimated using the following methods:

Let k be the internal counter value, seq_no1 be the sequence number indicated by the current resynchronization marker, and seq_no2 be the sequence number from the next resynchronization marker. The sequence number for the current sequence can be estimated as follows:

```
if (k!= seq_no1)   /* error detected */
{
      if (seq_no2<=seq_no1)
          estimated_seq_no = seq_no2-1;
              else
          estimated_seq_no = seq_no1;


      if (estimated_seq_no < k)
          estimated_seq_no = k;
}
```

Then do error concealment for sequence number k to estimated_seq_no-1. Currently, for error concealment, we reset all the quantized values to zero.

(b) Error detection by size of the bitstream: there are two sizes for each sequence. The sizes from the arithmetic decoder (after decoding the bitstream for the sequence), and the size estimated by checking the distance between two resynchronization makers. When these two sizes are in agreement, no error signal is flashed. Otherwise, we have an error. When an error is detected, we do error concealment for the sequence.

Experimental results

The following Tables 1-4 shows PSNR results using the above described methods under various channel errors. There are two types of channel error used: random error and burst error. The channel errors are simulated using the software simulation package distributed to the JPEG community by NTT-Docomo. The results are from the average of 100 runs of simulation. Section (1) shows the comparisons of results between the JPEG2000 baseline and the preferred embodiment method under various error rates and types, and section (2) compares the performance under error free conditions in a bit more detail. According to the common test conditions for error resilience, the parameters used for baseline coding are: -mallat, -bp_r, -a, -w7x9, -e 0.002 0.

(1) PSNR results:

Table 1.

| PSNR Results for Bike | | | | | |
|---|---|---|---|---|---|
| Bike | | 0.0125 b/p | | 0.5 b/p | |
| Burst Error | BER | Baseline | Core | Baseline | Core |
| BLEN | | Gain | | Gain | |
| 0.001 | 1 | 5.92 16.15 | 10.23 | 6.55 15.38 | 8.83 |
| 0.001 | 10 | 8.74 22.35 | 13.61 | 6.82 21.03 | 14.21 |
| 0.01 | 1 | 5.62 11.43 5.81 | | 6.31 11.34 | 5.03 |
| 0.01 | 10 | 6.26 15.81 9.55 | | 7.49 15.05 | 7.56 |

Table 1.  (continued)

| PSNR Results for Bike | | | | | |
|---|---|---|---|---|---|
| Bike | | 0.0125 b/p | | 0.5 b/p | |
| Burst Error | BER | Baseline | Core | Baseline | Core |
| BLEN | | Gain | | Gain | |
| Random 0.001 | Error | 5.66 11.21 5.55 | | 6.02 11.15 | 5.13 |
| 0.01 | | 5.33 10.95 5.62 | | 5.51 10.98 | 5.47 |
| 0.1 | | 4.38 10.98 6.60 | | 4.56 10.98 | 6.42 |
| Error Free | | 28.77 28.79 | +0.02 | 32.56 32.56 | 0.00 |

Table 2.

| PSNR Results for Cafe | | | | | |
|---|---|---|---|---|---|
| Cafe | | 0.0125 b/p | | 0.5 b/p | |
| Burst Error | BER | Baseline | Core | Baseline | |
| BLEN | | Gain | | Core | Gain |
| 0.001 | 1 | 5.83 14.64 | 8.81 | 6.41 13.96 | 7.55 |
| 0.001 | 10 | 7.01 18.93 | 11.92 | 6.68 18.94 | 12.26 |
| 0.01 | 1 | 5.64 11.33 | 5.69 | 6.14 11.15 | 5.01 |
| 0.01 | 10 | 5.76 14.42 | 8.66 | 6.33 13.76 | 7.43 |
| Random 0.001 | Error | 5.57 11.15 | 5.58 | 5.87 11.03 | 5.16 |
| 0.01 | | 5.35 10.89 | 5.54 | 5.69 10.85 | 5.16 |
| 0.1 | | 5.44 10.89 | 5.45 | 4.87 10.88 | 6.01 |
| Error Free | | 23.13 23.11 | -0.02 | 26.68 26.69 | +0.01 |

Table 3.

| PSNR Results for Woman | | | | | |
|---|---|---|---|---|---|
| Woman | | 0.0125 b/p | | 0.5 b/p | |
| Burst Error | BER | Baseline | Core | Baseline | Core |
| BLEN | | Gain | | Gain | |
| 0.001 | 1 | 8.80 20.38 | 11.58 | 9.52 19.50 | 9.98 |
| 0.001 | 10 | 12.68 25.69 | 13.01 | 10.55 25.60 | 15.05 |
| 0.01 | 1 | 7.42 12.85 | 5.43 | 7.66 12.67 | 5.01 |
| 0.01 | 10 | 8.87 19.91 | 11.04 | 10.48 19.07 | 8.59 |
| Random 0.001 | Error | 7.23 12.55 | 5.32 | 7.43 12.38 | 4.95 |
| 0.01 | | 6.33 12.08 | 5.75 | 6.45 12.06 | 5.61 |
| 0.1 | | 5.09 12.09 | 7.00 | 5.17 12.06 | 6.89 |
| Error Free | | 27.52 27.52 | 0.00 | 33.78 33.78 | 0.00 |

(2). Comparisons for error-free cases:

Table 4.

| Performance for error-free cases | | | | |
|---|---|---|---|---|
| Image | Baseline Bitrate PSNR | | Core-Experiment Bitrate PSNR | |
| Bike | 1.9999 | 44.04 | 1.9996 | 44.04 |
| | 0.9993 | 37.38 | 0.9996 | 37.39 |
| | 0.4994 | 32.56 | 0.4995 | 32.56 |
| | 0.2498 | 28.77 | 0.2499 | 28.79 |
| | 0.1242 | 25.62 | 0.1241 | 25.62 |
| | 0.0617 | 23.14 | 0.0619 | 23.14 |
| Cafe | 1.9998 | 39.15 | 1.9994 | 39.14 |
| | 1.0000 | 31.80 | 0.9992 | 31.79 |
| | 0.4984 | 26.68 | 0.4998 | 26.69 |
| | 0.2499 | 23.13 | 0.2496 | 23.11 |
| | 0.1246 | 20.61 | 0.1242 | 20.59 |
| | 0.0612 | 18.72 | 0.0615 | 18.72 |
| Woman | 1.9992 | 44.74 | 1.9997 | 44.73 |

Table 4.   (continued)

| Performance for error-free cases | | | | |
|---|---|---|---|---|
| Image | Baseline<br>Bitrate<br>PSNR | | Core-Experiment<br>Bitrate<br>PSNR | |
| | 0.9999 | 38.45 | 0.9995 | 38.44 |
| | 0.4985 | 33.78 | 0.4985 | 33.78 |
| | 0.2498 | 30.20 | 0.2493 | 30.19 |
| | 0.1238 | 27.52 | 0.1240 | 27.52 |
| | 0.0623 | 25.54 | 0.0620 | 25.51 |
| Aerial2 | 1.9981 | 39.83 | 1.9997 | 39.83 |
| | 1.0000 | 34.09 | 0.9995 | 34.08 |
| | 0.4998 | 30.94 | 0.4995 | 30.94 |
| | 0.2492 | 28.62 | 0.2494 | 28.62 |
| | 0.1241 | 26.43 | 0.1243 | 26.43 |
| | 0.0614 | 24.28 | 0.0616 | 24.28 |
| Target | 1.9994 | 54.19 | 1.9982 | 54.39 |
| | 0.9990 | 39.55 | 0.9991 | 39.65 |
| | 0.4987 | 30.36 | 0.4994 | 30.50 |
| | 0.2494 | 24.43 | 0.2497 | 24.47 |
| | 0.1243 | 19.71 | 0.1240 | 18.99 |
| | 0.0624 | 16.49 | 0.0619 | 16.09 |
| Compnd2 | 1.9996 | 51.08 | 1.9998 | 51.08 |
| | 0.9993 | 41.57 | 0.9993 | 41.58 |
| | 0.4991 | 34.52 | 0.4991 | 34.53 |
| | 0.2494 | 29.66 | 0.2493 | 29.66 |
| | 0.1245 | 26.17 | 0.1243 | 26.17 |
| | 0.0621 | 23.48 | 0.0619 | 23.48 |

The foregoing results clearly show that the data partitioning and resynchronization method of the preferred embodiment significantly improves the performance of the baseline coder under various channel conditions. The improvement in PSNR is typically more than 10db for burst errors. In the meantime, the coding efficiency under error-free condition remains the same.

Syntax Changes

The preferred embodiment data partitioning and resynchronization method thus improve the current JPEG2000 baseline error resiliency. In addition, since for the error-free cases the preferred embodiment changes have the same coding efficiency as the current baseline for all types of images at all bitrates, the preferred embodiment syntax should be incorporated into the current JPEG2000 baseline syntax.

In addition to the above preferred embodiment data partitioning and resynchronization, which has been shown to significantly improve the robustness of the baseline, the following preferred embodiment syntax, which should further improve the robustness of the coder:

(1). Bitplane level resynchronization (optional): put a bitplane resynchronization marker at the beginning of each bitplane, and reinitialize the arithmetic models to uniform distributions. The format should be as follows:

| Bitplane Resynch Marker | Bitplane Number |
|---|---|

(2) . Block level resynchronization (optional): put a resynchronization marker at a block boundary (chosen by the encoder) and reinitialize the arithmetic models to uniform distributions. The format should be as follows:

| Block Resynch Marker | Incremental Block count |
|---|---|

The resynch marker contains the number of blocks between the current and last resynchronization marker. The block size will be 8x8 at the highest subband and decrease accordingly when resolution gets lower (the same as the map information).

(3). The choice of resynchronization markers: the following are preferred values for the three resynchronization markers, which will not be emulated by the arithmetic coder:

*sequence resynch marker:* FF F0
*Bitplane resynch marker:* FF DD
*Block resynch marker:* FF 55

(4). The placement of various resynchronization markers: due to the increased number of bitplanes and blocks, the overhead for these resynchronization markers are not negligible and should be adapted to the channel error rate. A preferred embodiment makes the sequence resynchronization marker mandatory (due to the fact that its impact on coding efficiency is negligible), and make the placement of bitplane and block resynchronization markers optional. According to the channel error rate, the encoder can decide whether to use bitplane resynchronization marker or block resynchronization marker, and where to place these markers. The presence of these resynchronization marker is indicated by the header information, and the decoder can determine the locations of these resynchronization markers by searching for them. For instance, one strategy to place the block resynchronization marker is to place them at equal bit intervals.

Modifications

The preferred embodiments may be varied in many ways while retaining one or more of their features of resynchronization markers for the sequences and initializing the arithmetic coding model distribution for each sequence.

## Claims

1. A method of encoding an image, comprising the steps of:

   (a) classify wavelet coefficient blocks into classes;
   (b) scan the coefficients in each class to form a sequence corresponding to the class; and
   (c) provide resynchronization marker for each sequence.

2. The method of claim 1, wherein:

   (a) encode said sequences with an arithmetic code with uniform distribution initialization of the arithmetic coding models for each sequence.

3. A method of decoding a bitstream, comprising the steps of:

   (a) interpret a resynchronization marker in a bitstream as indication of the start of a sequences of coded coefficients constituting a class.

4. The method of claim 3, wherein:

(a) the resynchronization marker includes a sequence number.

IMAGE → | ENCODER | → | TRANSMISSION CHANNEL OR STORAGE | → | DECODER | → RECONTRUCTED IMAGE

*FIG. 1a*

IMAGE → | WAVELET TRANSFORM | → | CLASSIFIER (8x8 BLOCKS) | → | CLASS SCAN TO FORM SEQUENCE |

| IMBED RESYNCHRONIZATION MARKERS | ← | ARITHMETIC CODE BITPLANES | ← | QUANTIZE SEQUENCE |

→ CODED IMAGE

*FIG. 1b*

CODED IMAGE → | ERROR DETECTION | → | ERROR CONCEALMENT | → | DECODE | → RECONTRUCT IMAGE

*FIG. 1c*

708

1152

| LL1 | HL1 |
|-----|-----|
| LH1 | HH1 |

*FIG. 2a*

| LL2 | HL2 | HL1 |
|-----|-----|-----|
| LH2 | HH2 | |
| LH1 | | HH1 |

*FIG. 2b*

LL4  HL4  HH4

LH4

LH3

LH2

LH1

HL3

HH3

HL2

HH2

HL1

HH1

DESCENDANCY

*FIG. 2c*

**European Patent Office**

**EUROPEAN SEARCH REPORT**

Application Number

EP 99 20 0835

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 98 11728 A (WDE INC ;ZADOR ANDREW MICHAEL (CA)) 19 March 1998<br>* page 3, line 6 - page 3, line 33 *<br>* page 5, line 1 - page 6, line 7 *<br>* page 29, line 32 - page 30, line 10 *<br>--- | 1-4 | H04N7/26<br>H04N7/68 |
| X | EP 0 731 422 A (MITSUBISHI ELECTRIC CORP) 11 September 1996<br>* column 7, line 25 - column 7, line 54 *<br>* figures 27,35 *<br>--- | 3,4 | |
| A | SIMONCELLI E P ET AL: "Embedded wavelet image compression based on a joint probability model"<br>PROCEEDINGS. INTERNATIONAL CONFERENCE ON IMAGE PROCESSING (CAT. NO.97CB36144), PROCEEDINGS OF INTERNATIONAL CONFERENCE ON IMAGE PROCESSING, SANTA BARBARA, CA, USA, 26-29 OCT. 1997, pages 640-643 vol.1, XP000792853<br>ISBN 0-8186-8183-7, 1997, Los Alamitos, CA, USA, IEEE Comput. Soc, USA<br>* the whole document *<br>--- | 1,2 | TECHNICAL FIELDS SEARCHED (Int.Cl.6)<br><br>H04N |
| A | GONZALES-ROSILES G ET AL: "RECOVERY WITH LOST SUBBAND DATA IN OVERCOMPLETE IMAGE CODING"<br>9 May 1995 , PROCEEDINGS OF THE INTERNATIONAL CONFERENCE ON ACOUSTICS, SPEECH, AND SIGNAL PROCESSING (ICASSP), DETROIT, MAY 9 - 12, 1995 DIGITAL SIGNAL PROCESSING, VOL. VOL. 2, PAGE(S) 1476 - 1480 , INSTITUTE OF ELECTRICAL AND ELECTRONICS ENGINEERS XP000532954<br>* the whole document *<br>---<br>-/-- | 1 | |

The present search report has been drawn up for all claims

| Place of search | Date of completion of the search | Examiner |
|---|---|---|
| THE HAGUE | 17 May 1999 | Fassnacht, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

## EUROPEAN SEARCH REPORT

European Patent Office

Application Number

EP 99 20 0835

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| P,X | EP 0 892 557 A (TEXAS INSTRUMENTS INC) 20 January 1999 * page 4, line 37 - page 6, line 47 * * page 9, line 1 - page 9, line 9 * ----- | 1-4 | |
| | | | **TECHNICAL FIELDS SEARCHED (Int.Cl.6)** |

The present search report has been drawn up for all claims

| Place of search | Date of completion of the search | Examiner |
|---|---|---|
| THE HAGUE | 17 May 1999 | Fassnacht, C |

EPO FORM 1503 03.82 (P04C01)

## ANNEX TO THE EUROPEAN SEARCH REPORT
## ON EUROPEAN PATENT APPLICATION NO.

EP 99 20 0835

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-1999

| Patent document cited in search report | | Publication date | Patent family member(s) | | Publication date |
|---|---|---|---|---|---|
| WO 9811728 | A | 19-03-1998 | AU<br>CA<br>EP | 3249697 A<br>2257694 A<br>0908055 A | 02-04-1998<br>19-03-1998<br>14-04-1999 |
| EP 0731422 | A | 11-09-1996 | JP<br>US | 8251595 A<br>5699117 A | 27-09-1996<br>16-12-1997 |
| EP 0892557 | A | 20-01-1999 | NONE | | |

EPO FORM P0459

For more details about this annex : see Official Journal of the European Patent Office, No. 12/82